# EUROPEAN PATENT SPECIFICATION

(11) **EP 4 357 640 B1**
(45) Date of publication and mention of the grant of the patent: **07.05.2025**
(21) Application number: 23204954.4
(22) Date of filing: 20.10.2023
(51) Int. Cl.: F16G 1/10

(54) **TOOTHED DRIVE BELT**
GEZAHNTER ANTRIEBSRIEMEN
COURROIE DENTÉE

(30) Priority: 21.10.2022 IT 202200021783
(43) Date of publication of application: 24.04.2024
(73) Proprietor: Elatech Srl, 24012 Val Brembilla (BG) (IT)
(72) Inventor: GERVASONI, Matteo, 24012 Val Brembilla (BG) (IT)
(74) Representative: Marietti, Andrea

(56) References cited:
- EP-A2- 0 280 175

## Description

### FIELD OF THE INVENTION

The present invention relates to a drive belt.

In particular, the present invention relates to a toothed drive belt wherein the teeth are preferably formed at a constant pitch along the longitudinal direction of the inner surface of the belt.

### KNOWN PRIOR ART

As known, toothed drive belts are used to synchronize the rotation of rotating shafts, e.g. the crankshaft and camshaft in an endothermic engine or other applications.

Document JP6450151B2 describes a power-transmission toothed belt that uses a three-dimensional fabric consisting of three layers of mesh, which allows rubber to penetrate the inside of this structure, reinforcing it. The fibres used in making the three-dimensional fabric may be natural or synthetic fibres, such as cotton, regenerated and non-regenerated cellulose fibre, rayon, polyester, polyamide, polyacrylonitrile with preference for polyester fibres, such as polyethylene terephthalate, polyethylene terephthalate, polybutylene terephthalate. Three-dimensional fabric can be adopted near the joining portion or over the entire compression layer of rubber.

Document JPS63167147A describes a toothed belt that adopts a tooth portion reinforcing fabric seamlessly with the reinforcing fabric of the belt body. The document shows these reinforcements as the result of seamless three-dimensional weaving.

In this document, however, it is only the same three-dimensional weaving that works as a reinforcing element of the belt, i.e. by exploiting only the structural strength of the three-dimensional weaving. No penetration of the belt's polymeric material inside the reinforcing fabric seems to be provided.

EP 0280175 A2 sets forth that it is a known technique to use a peripheral layer of reinforcing fabric inside the teeth of a polyurethane toothed belt, in such a way that this fabric layer is arranged on the outer periphery of the notched profile.

EP 0280175 A2 does not mention the use of a three-dimensional fabric, describing the use of a surface layer of a generic reinforcing fabric and deems the penetration of liquid polyurethane into the same fabric to be harmful.

Object of the present invention is to make a toothed drive belt that offers dynamic performance significantly improved compared to the known technique, both in terms of longer life and in terms of the strength of the individual teeth.

A further object of the present invention is to achieve the aforesaid result in a practical and economical way.

### BRIEF SUMMARY OF THE INVENTION

These and other objects are achieved by a process for making a toothed drive belt, wherein the aforesaid process comprises at least the following steps of:
- prearranging a male mould equipped with a toothing;
- winding, or placing, i.e. fitting, on the male mould a sleeve which comprises at least one inner layer comprising a three-dimensional fabric, said three-dimensional fabric conforming to, or being shaped by, the toothing of said male mould;
- closing the male mould by using a female mould;
- injecting liquid polyurethane into the mould in such a way that the liquid polyurethane penetrates the three-dimensional fabric, that is pre-shaped for adapting to the male mould or that is shaped by the same male mould, to form the teeth profile of the drive belt, said three-dimensional fabric at least substantially constituting the entire body, i.e. preferably constituting the inner frame, of each tooth;
- separating the male mould from the female mould to extract the formed sleeve, once the polyurethane has solidified, which *inter alia* has penetrated the three-dimensional fabric, and
- cutting the sleeve to form at least one toothed drive belt.

An advantage of this implementation is that it allows to pair a polymeric fabric which uses a three-dimensional structure on the base of the male mould structure and which provides a natural framework for polyurethane penetration.

In addition, in the present invention, the three-dimensional fabric constitutes the entire body of the tooth and, therefore, does not act as an auxiliary reinforcement of an existing structure but constitutes structural element of the tooth.

The term "place" or "placement" herein means that the sleeve comprising at least one inner layer - i.e. a layer intended to come into contact with the male mould - of three-dimensional fabric may already be made in the shape of sleeve and then be fitted on this male mould. The term 'wind' or 'winding' herein means that the sleeve comprising at least one inner layer of three-dimensional fabric - i.e. a layer intended to come into contact with the male mould - is shaped like a sleeve by winding it around the same male mould. Three-dimensional fabric generally means a woven fabric, or even a non-woven fabric, that has a predominantly three-dimensional structure, with a third - transverse - dimension that is perceptibly detectable compared to the usual two dimensions of conventional fabrics. In practice, this fabric comprises fibres or yarns arranged along parallel planes and along transverse planes, in such a way as to define three-dimensional cells between these fibres or yarns. This structure normally provides better stiffness and strength in the cross direction. For example, three-dimensional fabrics are known in which yarns are woven not only orthogonally to each other but also transversely. A 3D fabric that can be used with the present invention can be a polyester fabric with a honeycomb structure.

Object of the invention is further a toothed drive belt made according to the process described above.

In particular, the toothed drive belt, according to an implementation of the invention, comprises at least one:
- belt body of polymeric material chosen from polyurethane or rubber with hardness from 70 Sh A to 60 Sh D
- a three-dimensional toothing reinforcing fabric which is penetrated by the polymeric material and constitutes the frame, i.e. the inner structure, of each tooth of the belt; and
- preferably, a traction element formed by a reinforcing cord.

The reinforcing cord is made of a material chosen from steel, zinc-plated steel, aramid fibre, carbon fibre, glass fibre, polyester or a combination of these materials.

This drive belt is preferably made according to one of the methods of the process described above.

Further characteristics and advantages of the invention can be deduced from the dependent claims.

### BRIEF DESCRIPTION OF THE FIGURES

Further characteristics and advantages of the invention will become clear from reading the following description provided by way of non-limiting example, with the aid of the figures depicted in the accompanying drawings, in which:
- Figure 1 is a sectional view of a drive belt according to an implementation of the invention; and
- Figure 2 is an axonometric view of a male mould for making the drive belt of figure 1.

### DETAILED DESCRIPTION OF SOME EMBODIMENTS OF THE PRESENT INVENTION

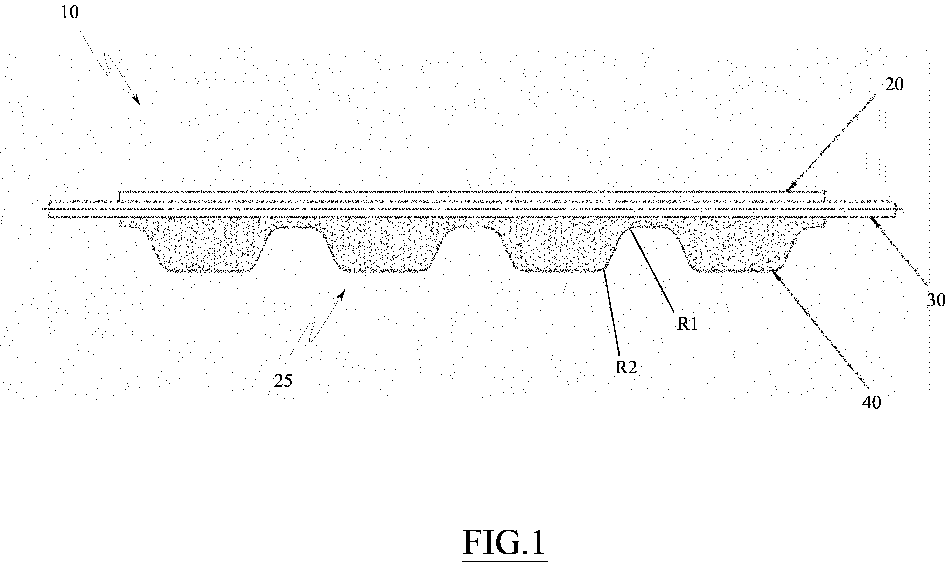

With reference first to figure 1, it is noted that said figure shows in section a drive belt according to an implementation of the invention and globally denoted by the reference numeral 10.

The drive belt 10 is a toothed drive belt which comprises a polyurethane belt base 20, a zinc-plated steel cord 30 and a three-dimensional reinforcing fabric 40 which covers the toothing of the belt 10.

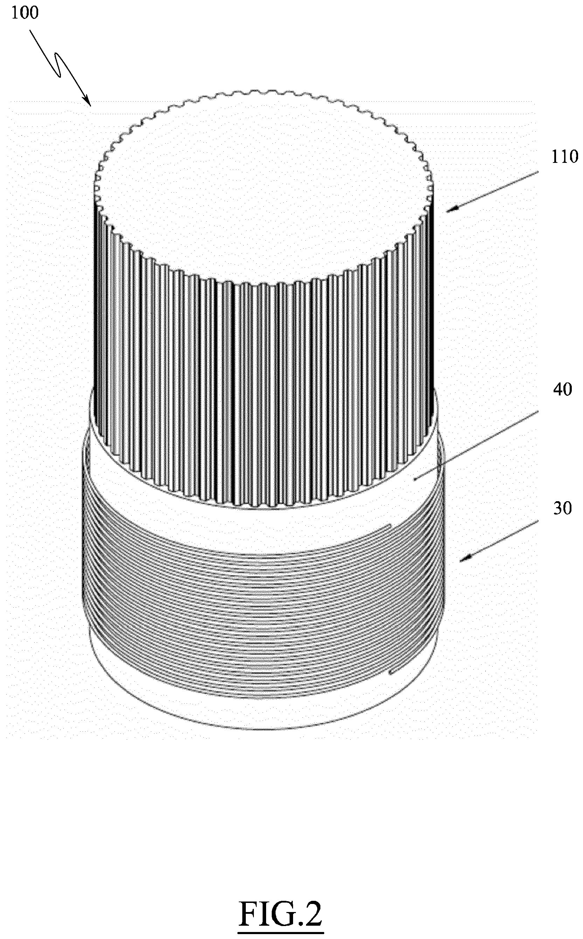

Figure 2 is an axonometric view of a male mould for making the drive belt of figure 1, globally denoted by the reference numeral 100 and in which the mould 110 is visible, which is adapted to obtain the teeth 25 of the toothed belt 10.

A sleeve that has the reinforcing cord 30 and the three-dimensional reinforcing fabric 40 is wound, or fit, on the mould 110.

In particular, a reinforcing cord 30 is wound in a continuous spiral onto the three-dimensional fabric 40.

The reinforcing cord 30 can be made of a material chosen from steel, zinc-plated steel, aramid fibre, carbon fibre, glass fibre, polyester or a combination of these materials.

The three-dimensional reinforcing fabric 40 can be made of, e.g., polyester and have three-dimensional cells therein. This fabric 40 can be made as a homogeneous parallelepiped-shaped layer or it may be shaped with a substantially identical, or closely analogous, toothing to that intended to be achieved in the drive belt 10.

In a simplified embodiment not shown herein, the sleeve which is wound or fits on the male mould 110, i.e. it is fitted on the latter, may also be without the aforesaid reinforcing cord 30. In particular, the sleeve that is wound or fits on the toothed male mould 110 may comprise a single layer of three-dimensional fabric 40.

It is noted that this three-dimensional fabric layer 40 is referred to herein as the "inner layer" to mean that it is intended to be arranged directly in contact with the aforesaid toothed male mould 110.

In general, the process for making a toothed drive belt according to an implementation of the invention is carried out according to the following steps of:
- prearranging a male mould 110 equipped with a toothing, e.g. a male mould preferably cylindrical and equipped with axial grooves on its outer side surface (see figure 2);
- winding or placing a sleeve, which comprises at least one inner layer comprising a three-dimensional fabric 40, on the male mould 110;
- closing the male mould 110 by using a female mould, preferably substantially cylindrical;
- injecting liquid polyurethane into the mould 110 in such a way that the liquid polyurethane penetrates the three-dimensional fabric 40, that is shaped for the male mould 110 or that is shaped by the same male mould 110, to form the profile of the teeth 25 of the drive belt 10, in such a way that the three-dimensional fabric 40 at least substantially constitutes the entire body of each tooth and, preferably, substantially constitutes the inner structure, i.e. frame, of the toothed drive belt 10 to be made;
- separating the male mould 110 from the female mould in order to extract the sleeve formed when the liquid polyurethane has solidified, which among other things has penetrated the three-dimensional fabric 40; and
- cutting the sleeve to form at least one drive belt 10.

During the manufacturing process described above, two alternatives are possible.

According to a first implementation of the invention, prior to winding the sleeve, which comprises the inner layer comprising a three-dimensional fabric 40, on the male mould 110, the aforesaid three-dimensional fabric 40 is pre-formed so as to follow the profile of the toothing of the male mould 110.

According to an alternative implementation of the invention, the three-dimensional fabric 40 is pre-formed in contact with the toothing profile of the male mould 110 by simple adaptation, e.g. by even slight compression, on this male mould 110.

In particular, the injection of liquid polyurethane into the mould 110 is such that the liquid polyurethane entirely fills the spaces present in the three-dimensional fabric 40 and then solidifies later, thus reinforcing the matrix of the three-dimensional fabric.

During the step of injecting liquid polyurethane into the mould 110, said liquid polyurethane also creates the base layer 20 of the belt 10 by penetrating at least the three-dimensional fabric 40.

Advantageously, the polymer fabric 40 may use a three-dimensional structure on the base of the structure of the male mould 110 and can therefore be shaped in such a way that the teeth 25 of the belt have corner radii R1 and R2 having the desired values for the various applications.

In the finished toothed drive belt 10 the polymer fabric 40, as shown e.g. in figure 1, substantially constitutes the structure, i.e. the frame, of the belt teeth and, preferably, also of most of the entire drive belt 10.

In particular according to an implementation of the invention, the toothed drive belt 10 comprises at least one:
- belt body of polymeric material, chosen from polyurethane or rubber with hardness from 70 Sh A to 60 Sh D;
- a three-dimensional reinforcing fabric 40 of the toothing, penetrated by said polymeric material and constituting the inner frame of each tooth; and
- preferably at least one traction element formed by a reinforcing cord (30).

The three-dimensional reinforcing fabric 40, e.g. of polyester, penetrated by polyurethane or rubber, *de facto* constitutes the entire body of the tooth, as it constitutes the structural element thereof.

The reinforcing cord is made of a material chosen from steel, zinc-plated steel, aramid fibre, carbon fibre, glass fibre, polyester or a combination of these materials.

Obviously, modifications or improvements that are dictated by contingent or particular reasons may be made to the invention as described, without thereby departing from the scope of the invention as claimed below.

## Claims

1. Process for making a toothed drive belt (10), wherein the aforesaid process comprises at least the following steps of:
- prearranging a male mould (110) equipped with a toothing;
- winding or placing, on the male mould (110), a sleeve which comprises at least one inner layer comprising a three-dimensional fabric (40), said three-dimensional fabric conforming to, or being shaped by, the toothing of said male mould;
- closing the male mould (110) by using a female mould;
- injecting liquid polyurethane into the mould (110) m such a way that the liquid polyurethane penetrates the three-dimensional fabric (40) shaped for, or shaped by, the male mould (110), to form the entire profile of the teeth (25) of the drive belt (10), said three-dimensional fabric (40) at least substantially constituting the entire body of each tooth;
- separating the male mould from the female mould in order to extract the formed sleeve; and
- cutting the sleeve to form at least one drive belt (10).

2. Process according to claim 1, wherein a reinforcing cord (30) is wound in a continuous spiral onto the three-dimensional fabric (40).

3. Process according to claim 1, wherein the step of injecting liquid polyurethane into the mould (110) is carried out in such a way that the liquid polyurethane creates a base layer (20) of the belt (10).

4. Process according to claim 1, wherein prior to winding on the male mould (110) the sleeve which comprises the inner layer comprising a three-dimensional fabric (40), the aforesaid three-dimensional fabric (40) is pre-shaped so as to follow the entire toothing profile of the male mould (110).

5. Process according to claim 1, wherein the three-dimensional fabric (40) is pre-shaped in contact with the toothing profile of the male mould (110).

6. Process according to claim 1, wherein the injection of liquid polyurethane into the mould (110) is such that the liquid polyurethane fills entirely the spaces present in the three-dimensional fabric (40).

7. Process according to claim 1, wherein the three-dimensional fabric (40) is made of polyester.

8. Toothed drive belt (10) produced by the process of any of the preceding claims comprising at least one:
- belt body of polymeric material chosen from polyurethane or rubber with hardness from 70 Sh A to 60 Sh D
- a three-dimensional reinforcing fabric (40) of the toothing, penetrated by said polymeric material and constituting at least the inner frame of each tooth.

9. Toothed drive belt (10) according to claim 8, comprising at least one traction element formed by a reinforcing cord (30).

10. Toothed drive belt (10) according to claim 9, wherein the reinforcing cord (30) is made of a material chosen from steel, zinc-plated steel, aramid fibre, carbon fibre, glass fibre, polyester or a combination of these materials.

## Patentansprüche

1. Verfahren zur Herstellung eines Zahnantriebsriemens (10), wobei das Verfahren mindestens die folgenden Schritte umfasst:
- Vorbereiten einer mit einer Verzahnung versehenen Patrize (110);
- Aufwickeln oder Platzieren einer Hülse, die mindestens eine innere Schicht, umfassend ein dreidimensionales Gewebe (40), aufweist, auf der Patrize (110), wobei das dreidimensionale Gewebe der Verzahnung der Patrize entspricht oder durch diese geformt ist;
- Schließen der Patrize (110) mittels einer Matrize;
- Einspritzen von flüssigem Polyurethan in die Patrize (110) derart, dass das flüssige Polyurethan das dreidimensionale Gewebe (40) durchdringt, das für die Patrize (110) geformt ist oder durch diese geformt ist, um das gesamte Profil der Zähne (25) des Antriebsriemens (10) zu bilden, wobei das dreidimensionale Gewebe (40) zumindest im Wesentlichen den gesamten Körper jedes Zahns bildet;
- Trennen der Patrize von der Matrize, um die geformte Hülse zu entnehmen; und
- Zuschneiden der Hülse zur Bildung von mindestens einem Antriebsriemen (10).

2. Verfahren nach Anspruch 1, wobei eine Verstärkungsschnur (30) in einer kontinuierlichen Spirale auf das dreidimensionale Gewebe (40) gewickelt wird.

3. Verfahren nach Anspruch 1, wobei der Schritt des Einspritzens von flüssigem Polyurethan in die Patrize (110) derart durchgeführt wird, dass das flüssige Polyurethan eine Basisschicht (20) des Riemens (10) bildet.

4. Verfahren nach Anspruch 1, wobei vor dem Aufwickeln der Hülse, die mindestens eine innere Schicht, umfassend ein dreidimensionales Gewebe (40), aufweist, auf die Patrize (110) das dreidimensionale Gewebe (40) derart vorgeformt wird, dass es dem gesamten Zahnprofil der Patrize (110) folgt.

5. Verfahren nach Anspruch 1, wobei das dreidimensionale Gewebe (40) im Kontakt mit dem Zahnprofil der Patrize (110) vorgeformt wird.

6. Verfahren nach Anspruch 1, wobei das Einspritzen von flüssigem Polyurethan in die Patrize (110) derart erfolgt, dass das flüssige Polyurethan die im dreidimensionalen Gewebe (40) vorhandenen Räume vollständig ausfüllt.

7. Verfahren nach Anspruch 1, wobei das dreidimensionale Gewebe (40) aus Polyester hergestellt ist.

8. Zahnantriebsriemen (10), hergestellt durch das Verfahren nach einem der vorherigen Ansprüche, umfassend mindestens eines von:
- Riemenkörper aus Polymermaterial, ausgewählt aus Polyurethan oder Gummi, mit einer Härte von 70 Sh A bis 60 Sh D
- ein dreidimensionales Verstärkungsgewebe (40) der Verzahnung, das von dem Polymermaterial durchdrungen ist und zumindest den inneren Rahmen jedes Zahns bildet.

9. Zahnantriebsriemen (10) nach Anspruch 8, umfassend mindestens ein Traktionselement, das aus einer Verstärkungsschnur (30) gebildet ist.

10. Zahnantriebsriemen (10) nach Anspruch 9, wobei die Verstärkungsschnur (30) aus einem Material hergestellt ist, das aus Stahl, verzinktem Stahl, Aramidfaser, Kohlefaser, Glasfaser, Polyester oder einer Kombination dieser Materialien ausgewählt ist.

## Revendications

1. Procédé de fabrication d'une courroie dentée (10), dans lequel ledit procédé comprend au moins les étapes suivantes consistant à :
- prédisposer un moule mâle (110) équipé d'une denture ;
- enrouler ou placer, sur le moule mâle (110), un manchon qui comprend au moins une couche intérieure comprenant un tissu tridimensionnel (40), ledit tissu tridimensionnel se conformant à la denture dudit moule mâle ou étant façonné par celle-ci ;
- fermer le moule mâle (110) en utilisant un moule femelle ;
- injecter du polyuréthane liquide dans le moule (110) de manière à ce que le polyuréthane liquide pénètre dans le tissu tridimensionnel (40) façonné pour, ou façonné par, le moule mâle (110), pour former le profil entier des dents (25) de la courroie (10), ledit tissu tridimensionnel (40) constituant au moins substantiellement le corps entier de chaque dent ;
- séparer le moule mâle du moule femelle afin d'extraire le manchon formé ; et
- couper le manchon pour former au moins une courroie (10).

2. Procédé selon la revendication 1, dans lequel un cordon de renforcement (30) est enroulé en spirale continue sur le tissu tridimensionnel (40).

3. Procédé selon la revendication 1, dans lequel l'étape d'injection de polyuréthane liquide dans le moule (110) est réalisée de telle sorte que le polyuréthane liquide crée une couche de base (20) de la courroie (10).

4. Procédé selon la revendication 1, dans lequel avant d'enrouler sur le moule mâle (110) le manchon qui comprend la couche intérieure comprenant un tissu tridimensionnel (40), ledit tissu tridimensionnel (40) est préformé de manière à suivre l'ensemble du profil de denture du moule mâle (110).

5. Procédé selon la revendication 1, dans lequel le tissu tridimensionnel (40) est préformé en contact avec le profil de denture du moule mâle (110).

6. Procédé selon la revendication 1, dans lequel l'injection de polyuréthane liquide dans le moule (110) est telle que le polyuréthane liquide remplit entièrement les espaces présents dans le tissu tridimensionnel (40).

7. Procédé selon la revendication 1, dans lequel le tissu tridimensionnel (40) est en polyester.

8. Courroie dentée (10) produite par le procédé de l'une quelconque des revendications précédentes, comprenant au moins un :
- corps de courroie en matériau polymère choisi parmi le polyuréthane ou le caoutchouc, d'une dureté comprise entre 70 Sh A et 60 Sh D
- un tissu de renforcement tridimensionnel (40) de la denture, pénétré par ledit matériau polymère et constituant au moins le cadre intérieur de chaque dent.

9. Courroie dentée (10) selon la revendication 8, comprenant au moins un élément de traction formé par une corde de renforcement (30).

10. Courroie dentée (10) selon la revendication 9, dans laquelle la corde de renforcement (30) est faite d'un matériau choisi parmi l'acier, l'acier zingué, la fibre aramide, la fibre de carbone, la fibre de verre, le polyester ou une combinaison de ces matériaux.
